(19) Europäisches Patentamt
European Patent Office
Office européen des brevets

(11) **EP 4 412 021 B1**

(12) **EUROPEAN PATENT SPECIFICATION**

(45) Date of publication and mention
of the grant of the patent:
**20.08.2025 Bulletin 2025/34**

(21) Application number: **23218731.0**

(22) Date of filing: **20.12.2023**

(51) International Patent Classification (IPC):
*H02J 3/32* (2006.01)    *H02J 7/00* (2006.01)

(52) Cooperative Patent Classification (CPC):
**H02J 3/32; H02J 7/0014; H02J 7/0048**

(54) **CONTROL METHOD FOR BALANCING SOCS OF BATTERIES OF AN ENERGY STORAGE SYSTEM AND RELATED DEVICE**

STEUERUNGSVERFAHREN ZUM AUSGLEICHEN VON SOCS VON BATTERIEN EINES ENERGIESPEICHERSYSTEMS UND ZUGEHÖRIGE VORRICHTUNG

PROCÉDÉ DE COMMANDE POUR ÉQUILIBRER DES SOC DE BATERIES D'UN SYSTÈME DE STOCKAGE D'ÉNERGIE ET DISPOSITIF ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.12.2022 CN 202211679371**

(43) Date of publication of application:
**07.08.2024 Bulletin 2024/32**

(73) Proprietor: **Xiamen Kehua Digital Energy Tech Co., Ltd.**
**Xiamen, Fujian 361100 (CN)**

(72) Inventors:
• **WEI, Weizhi**
**Xiamen 361100 (CN)**

• **LIN, Zhenhuang**
**Xiamen 361100 (CN)**
• **CHEN, Haisen**
**Xiamen 361100 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
EP-A1- 3 136 531     EP-A1- 3 255 718
WO-A1-2022/002122    US-A1- 2012 169 291

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to the technical field of energy storage, and more specifically relates to control methods for balancing states of charge (SOC) of batteries of an energy storage system (ESS) and devices related to the methods.

### BACKGROUND

With the increasing awareness of environmental protection and concerns about carbon emissions, the use and demand of renewable energy is increasing. However, renewable energy is intermittent, resulting in an imbalance between the supply and demand of power of a micro-grid system. To maintain the power balance of the system and improve the stability and reliability of the system, Distributed Energy Storage Systems (DESS) can be introduced.

In general, a method of droop control can be used to achieve current balance among different batteries of an ESS. However, this method can only make different batteries charge and discharge with the same charge-discharge power. In the case that initial SOCs of the batteries are imbalanced, charging and discharging with the same charge-discharge power will aggravate the imbalance of the initial SOCs and the balance of SOCs of the batteries cannot be ensured.

### SUMMARY

The present disclosure provides control methods for balancing SOCs of batteries of an ESS and related devices to solve the technical problem of SOC imbalance of batteries of an ESS. The invention is defined by the features of the independent claims. Preferred embodiments are defined in the dependent claims.

In the first aspect of the present disclosure, a control method for balancing SOC of batteries of an ESS is provided. The ESS includes a plurality of power conversion systems (PCS), where the PCSs are corresponds, one-to-one, with the batteries of the ESS, a first end of each PCS of the PCSs is connected with an output of a corresponding battery of the batteries of the ESS, a second end of each PCS is connected with a bus line. The control method includes:

calculating a SOC proportional coefficient of a present battery of the plurality of batteries of the ESS based on the SOC of the present battery and the SOC of all batteries online of the plurality of batteries of the ESS, where the SOC proportional coefficient refers to a proportion of the SOC of the present battery in the SOC of all batteries online; and

calculating a given charge-discharge power of the present battery based on a first target charge-discharge power of the ESS and the SOC proportional coefficient of the present battery, and controlling a charge-discharge power of the PCS corresponding to the present battery based on the given charge-discharge power of the present battery.

In the second aspect of the present disclosure, a control device for balancing SOC of batteries of an ESS is provided. The ESS includes a plurality of power conversion systems (PCS), where the PCSs are corresponds, one-to-one, with the batteries of the ESS, a first end of each PCS of the PCSs is connected with an output of a corresponding battery of the batteries of the ESS, a second end of each PCS is connected with a bus line. The control device includes:

a module for calculating SOC proportional coefficient, configured to calculate a SOC proportional coefficient of a present battery of the plurality of batteries of the ESS based on the SOC of the present battery and the SOC of all batteries online of the plurality of batteries of the ESS, wherein the SOC proportional coefficient refers to a proportion of the SOC of the present battery in the SOC of all batteries online; and

a module for power controlling, configured to calculate a given charge-discharge power of the present battery based on a first target charge-discharge power of the ESS and the SOC proportional coefficient of the present battery, and control a charge-discharge power of the PCS corresponding to the present battery based on the given charge-discharge power of the present battery.

In the third aspect of the present disclosure, a terminal is provided, which includes one or more processor, a memory and a computer executable program stored in the memory and executable by the one or more processor. The steps of the control method provided in the first aspect are performed, when the computer executable program is executed by the one or more processor.

In the fourth aspect of the present disclosure, a computer readable storage medium storing a computer executable program is provided. The steps of the control method provided in the first aspect are performed, when the computer executable program is executed by a processor.

Compared with the prior art, advantageous effects of the present disclosure which provides control methods and related devices for balancing SOCs of batteries of an ESS are as follows. When the control method is performed, the following steps are performed: calculating a SOC proportional coefficient of a present battery of the ESS based on the SOC of the present battery and the SOC of all batteries online of the ESS, calculating a given charge-discharge power of the present battery based on a first target charge-discharge power of the ESS and the SOC proportional coefficient of the present battery, and controlling a charge-discharge power of the PCS corresponding to the present battery based on the given charge-discharge power of the present battery. Different charge-discharge powers which are obtained based on the SOCs of the online batteries of the ESS can be dynamically distributed to their respective batteries, so that the SOCs of batteries of the ESS can be balanced.

## BRIEF DESCRIPTION OF THE DRAWINGS

In order to more clearly illustrate the technical solutions in the embodiments of the present disclosure, the drawings to be used in the descriptions of the embodiments or the prior art will be briefly described below. Obviously, the accompanying drawings in the following description are only some embodiments of the present disclosure, and for a person of ordinary skill in the art, without involving any inventive effort, other drawings may also be obtained according to these drawings.

Figure 1 is a schematic diagram of the structure of an ESS which may apply control methods according to the embodiments of the present disclosure;

Figure 2 is a flow chart of a control method for balancing SOCs of batteries of an ESS according to an embodiment of the present disclosure;

Figure 3 is a schematic diagram of the structure of a control device for balancing SOCs of batteries of an ESS according to embodiments of the present disclosure; and

Figure 4 is a schematic diagram of a terminal for balancing SOCs of batteries of an ESS according to embodiments of the present disclosure.

## DETAILED DESCRIPTION OF ILLUSTRATIVE EMBODIMENTS

In the following description, for illustrative rather than limiting, specific details such as a particular system structure, technology and the like are proposed so that those skilled in the art can thoroughly understand the disclosed embodiments. However, those skilled in the art should be clear that the present disclosure may also be implemented in other embodiments without these specific details. In other cases, the detailed description of well-known systems, devices, circuits, and methods is omitted to avoid unnecessary details interfering with the description of the present disclosure.

In order to make the purpose of the present disclosure, technical solutions and advantageous effects clearer, the following will be described by specific embodiments in conjunction with the drawings.

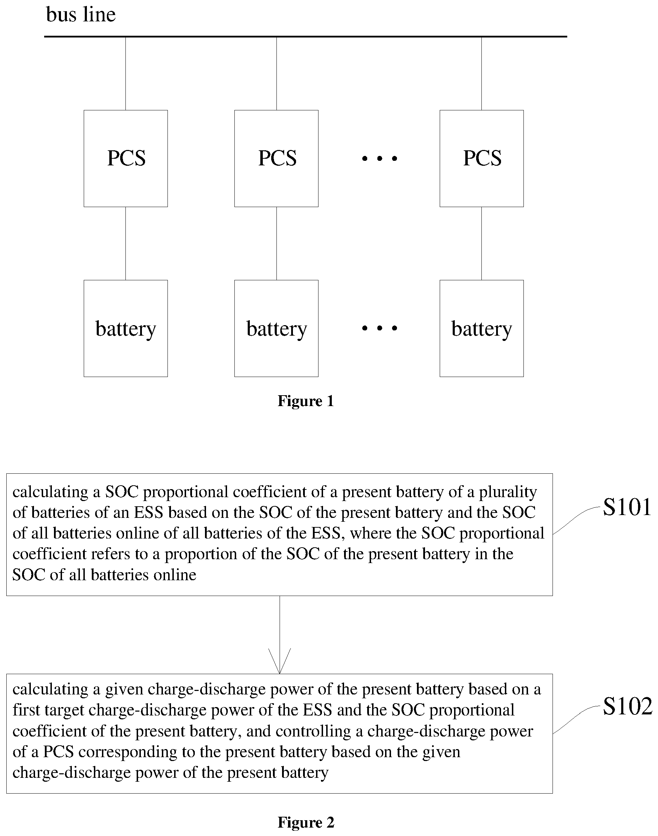

Figure 1 schematically shows a structure of an ESS which may apply control methods disclosed by the present disclosure. As shown in Figure 1, the ESS includes a plurality of PCSs and a plurality of batteries. The PSCs correspond with, one-to-to, the batteries. The output of each battery is connected with a first end of a corresponding PCS. Second ends of all PCSs are connected with a bus line.

Figure 2 is a flow chart of a control method for balancing SOCs of batteries of an ESS according to an embodiment of the present disclosure. In the embodiment, as shown in Figure 2, the control method includes steps S101 and S102 which are described below.

S101: calculating a SOC proportional coefficient of a present battery of a plurality of batteries of an ESS based on the SOC of the present battery and the SOC of all batteries online of all batteries of the ESS, where the SOC proportional coefficient refers to a proportion of the SOC of the present battery in the SOC of all batteries online.

S102: calculating a given charge-discharge power of the present battery based on a first target charge-discharge power of the ESS and the SOC proportional coefficient of the present battery, and controlling a charge-discharge power of a PCS corresponding to the present battery based on the given charge-discharge power of the present battery.

The control method of the present embodiment may be executed by a battery controller which can obtain the output voltage and output current of each battery of the ESS. Further, the battery controller can calculate the SOC of each battery based on a relationship between open circuit voltage (OCV) and SOC (e.g., an OCV-SOC curve). Then, the proportion $K_{SOC}$ (that is, the SOC proportional coefficient) of the SOC of the present battery in sum of SOCs of all online batteries can be calculated.

It should be noted that any battery of the ESS may be the present battery. That is, the control method provided by the present disclosure can be applied to each battery of the ESS. The number of online batteries may be one. And, in an extreme situation, the only one online battery may be the present battery. In the present embodiment, an online battery may be a battery capable of functioning properly.

Compared with the prior art, advantageous effects of the control method of the present embodiment are as follows. After the SOC proportional coefficient of each battery of an ESS is obtained, the given charge-discharge power of each battery is obtained through multiplying the target charge-discharge power of the ESS by the SOC proportional coefficient of each battery. Therefore, different batteries of the ESS can charge and discharge with their respective given charge-discharge powers, not the same charge-discharge power in the prior art. Furthermore, based on the SOC proportional coefficient, the charge-discharge power distributed to each battery can change dynamically over time, such that the technical problem of SOC imbalance of batteries of the ESS is solved.

In an embodiment, the control method for balancing SOCs of batteries of an ESS provided by the present disclosure further comprise steps S201 to S204 which are performed before S101 mentioned above to determine the operating state of each battery of the ESS. Steps S201 to S204 are described below. For each battery of the plurality of batteries of the ESS:

S201: if a second target charge-discharge power of the battery exceeds the maximum available power of the battery, determining the operating state of the battery to be a limited state;

S202: if any broadcast data of the battery is not detected for a first preset period of time, determining the operating state of the battery to be an offline state;

S203: if the battery is detected to be in the offline state or not be in a normal operating state in a second preset period of time, determining the operating state of the battery to be an abnormal state; and

S204: if the battery is not in the limited state and the abnormal state, determining the operating state of the battery to be an online state and the battery to be one of the batteries online.

In the present embodiment, all batteries of an ESS may send broadcast frames sequentially at a preset interval through a network. Each of the broadcast frames may include information of a battery such as operating state, output power, limited state and SOC. A value of the operating state of a battery may be RURE or FLASE, where TURE indicates that the battery is in a normal operating state and FLASE indicates that the battery is not in a normal operating state. A value of the limited state may be Ppower Limit or Ppower, where Ppower Limit indicates that the battery is in a limited state and Ppower indicates that the battery is not in the limited state.

Optionally, the preset interval may be one second.

In an embodiment, S201 mentioned above may include the following step:

determining the operating state of the battery to be the limited state, if the battery is in a discharge state and the second target charge-discharge power of the battery is greater than the maximum available power of the battery; or
if the battery is in a charge state and the second target charge-discharge power of the battery is less than the maximum available power of the battery.

Optionally, whether a battery is in the state of charge or discharge can be determined based on the positive and negative signs of the target charge-discharge power of the battery. That is, when the sign of the target charge-discharge power is positive, the battery is in the discharge state; and, when the sign of the target charge-discharge power is negative, the battery is in the charge state. It should be noted that, in the present embodiment, when determining the operating state of a battery, the signs of the second target charge-discharge power and the maximum available power of the battery are taken into consideration. Therefore, when the battery is in the charge state and the second target charge-discharge power is less than the maximum available power, the absolute value of the second target charge-discharge power is greater than the absolute value of the maximum available power.

The total charge-discharge power of an ESS (i.e., the target charge-discharge power of the ESS) can be sent by a master computer through network communication. The target charge-discharge power of each battery of the ESS can be obtained by multiplying the target charge-discharge power of the ESS by the SOC proportional coefficient of each battery, where the SOC proportional coefficient of a battery may be the ratio of SOC of the battery to the sum of SOCs of all batteries of the ESS.

Optionally, S202 (i.e., if any broadcast data of the battery is not detected for a first preset period of time, determining the operating state of the battery to be an offline state) may include the following step:
determining the operating state of the battery to be the offline state, if any broadcast frame of the battery is not detected by other batteries of the ESS (that is, batteries of the ESS other than the battery sending the broadcast frame) the first preset period of time.

Optionally, S203 (i.e., if the battery is detected to be in the offline state or not be in a normal operating state in a second preset period of time, determining the operating state of the battery to be an abnormal state) may include the following step:

if a controller detects that a communication between the battery and an ARM (Advanced RISC Machines) processor is normal, a communication between the battery and a host of a BCM (Battery Management System) of the ESS is normal, a system state machine of the battery is in a normal operating state, and the battery is not forbidden from charging and discharging, determining the operating state of the battery to be the normal operating state; otherwise, determining the operating state of the battery to be the abnormal state.

Optionally, the length of the period of time for determining whether the battery is in the abnormal state may be the same as the length of a period of protection time of abnormal communication, so that the problem of total power increasing can be avoided. When the operating state of a battery is determined to be the abnormal state, the charge-discharge power of this battery will be distributed to other batteries. If the length of the determining period is not the same as the length of the protection period, when the charge-discharge power of the abnormal battery has been distributed to other batteries, the abnormal battery may be not protected and be still outputting power which will increase the total power.

Optionally, the first preset period of time may be 10 seconds, and the second preset period of time may be 30 seconds.

In an embodiment, S101 (i.e., calculating a SOC proportional coefficient of a present battery of a plurality of batteries of an ESS based on the SOC of the present battery and the SOC of all batteries online of all batteries of the ESS) may include the following step:

calculating the SOC proportional coefficient of the present battery based on a first formula, where the first formula is for calculating SOC proportional coefficient and it may be:

$$\begin{cases} K_{soc\_i} = \dfrac{SOC_i}{SOC_{total}}, & P_{set} > 0 \\[4mm] K_{soc\_i} = \dfrac{SOC_{\max} - SOC_i}{\sum\limits_{i=1}^{N}(SOC_{\max} - SOC_i)}, & P_{set} < 0 \end{cases},$$

where:

$K_{SOC\_i}$ is the SOC proportional coefficient of an i-th battery;
$SOC_i$ is the SOC of the i-th battery;
$P_{set}$ is a third target charge-discharge power of the present battery, $P_{set} > 0$ indicates that the present battery is in a discharge state, and $P_{set} < 0$ indicates that the present battery is in a charge state;
$SOC_{total}$ is a sum of SOC of all batteries online;
$SOC_{\max}$ denotes a maximum value of charging state, where generally, it is 1; and
$N$ is a number of the all batteries online.

The first formula can calculate all SOC proportional coefficients of all batteries online, as $i$ changes from 1 to $N$. Based on the first formula, a second formula for calculating the SOC proportional coefficient of one battery can be obtained, where the second formula may be:

$$\begin{cases} K_{soc} = \dfrac{SOC_p}{SOC_{total}}, & P_{set} > 0 \\[2em] K_{soc} = \dfrac{SOC_{\max} - SOC_p}{\displaystyle\sum_{i=1}^{N}(SOC_{\max} - SOC_i)}, & P_{set} < 0 \end{cases},$$

where:

$K_{soc}$ is the SOC proportional coefficient of the present battery;
$P_{set}$ is a third target charge-discharge power of the present battery, wherein $P_{set} > 0$ indicates that the present battery is in a discharge state, and $P_{set} < 0$ indicates that the present battery is in a charge state;
$SOC_p$ is SOC of the present battery;
$SOC_{total}$ is a sum of SOC of all batteries online;
$SOC_{\max}$ denotes a maximum value of charging state;
$N$ is a number of the all batteries online; and
$SOC_i$ is the SOC of an i-th battery.

In an embodiment, S102 (i.e., calculating a given charge-discharge power of the present battery based on a first target charge-discharge power of the ESS and the SOC proportional coefficient of the present battery, and controlling a charge-discharge power of a PCS corresponding to the present battery based on the given charge-discharge power of the present battery) may include the following steps:

summing all charge-discharge power of all batteries in a limited state of all batteries of the ESS other than the present battery to obtain a sum of limited power;

subtracting the sum of limited power from the first target charge-discharge power of the ESS to obtain a fourth target charge-discharge power that is to be distributed; and

calculating the given charge-discharge power of the present battery by multiplying the fourth target charge-discharge power by the SOC proportional coefficient of the present battery.

Generally, if the target charge-discharge power of a battery is greater than the maximum available power of the battery, the charge-discharge power of the battery cannot be controlled dynamically by a controller. Therefore, it is better to perform power controlling on the batteries that are neither in the limited state nor in the abnormal state. Further, the batteries in the abnormal state can be disregarded because the charge-discharge power of them are zero. Therefore, in the present embodiment, only the batteries in the limited state are regarded and the sum of the charge-discharge power of them is calculated, that is, the sum of limited power. Then, the sum of limited power is subtracted from the target charge-discharge power of the ESS to obtain the target charge-discharge power to be distributed, that is, the fourth target charge-discharge power. Through multiplying the fourth target charge-discharge power to be distributed by the SOC proportional coefficient of each battery, the given charge-discharge power of each battery is obtained, so that each online battery can obtain its own charge-discharge power that is dynamically distributed to it and the SOCs of batteries of the ESS are balanced.

It should be understood that the size of the serial numbers of the steps appearing in the above embodiments do not imply the execution order. The execution order of each step shall be determined by its function and internal logic, and its serial number shall not constitute any qualification for the embodiment of the present disclosure.

The following are device embodiments of the present disclosure, and for details not exhaustively described therein, reference may be made to the corresponding method embodiments described above.

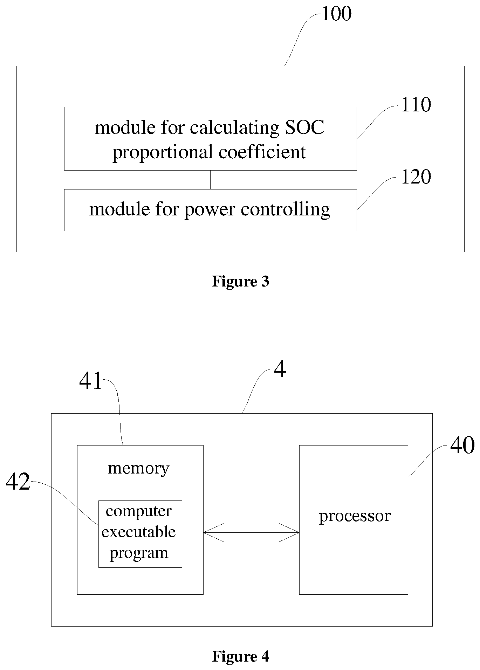

Figure 3 is a schematic diagram of the structure of a control device for balancing SOCs of batteries of an ESS, which, for illustrative purposes, only shows the portions related to embodiments of the present disclosure. The control device shown in Figure 3 is described in detail below.

As shown in Figure 3, a control device 100 for balancing SOCs of batteries of an ESS may include a module for calculating SOC proportional coefficient 110 and a module for power controlling 120.

The module for calculating SOC proportional coefficient 110 is configured to: calculate a SOC proportional coefficient of a present battery of the plurality of batteries of the ESS based on the SOC of the present battery and the SOC of all batteries online of the plurality of batteries of the ESS, where the SOC proportional coefficient refers to a proportion of the SOC of the present battery in the SOC of all batteries online.

The module for power controlling 120 is configured to: calculate a given charge-discharge power of the present battery based on a first target charge-discharge power of the ESS and the SOC proportional coefficient of the present battery, and control a charge-discharge power of the PCS corresponding to the present battery based on the given charge-discharge power of the present battery.

In an embodiment, the control device 100 may further include a module for determining online state which is configured to determine an operating state of each battery of the ESS and include a unit for determining limited state, a unit for determining offline state, a unit for determining abnormal state and a unit for determining online state.

The unit for determining limited state is configured to: if a second target charge-discharge power of the battery exceeds a maximum available power of the battery, determine the operating state of the battery to be a limited state.

The unit for determining offline state is configured to: if any broadcast data of the battery is not detected for a first preset period of time, determine the operating state of the battery to be an offline state.

The unit for determining abnormal state is configured to: if the battery is detected to be in the offline state or not be in a normal operating state in a second preset period of time, determine the operating state of the battery to be an abnormal state.

The unit for determining online state is configured to: if the battery is not in the limited state and the abnormal state, determine the operating state of the battery to be an online state and the battery to be one of the batteries online.

In an embodiment, the unit for determining limited state is configured to: determine the operating state of the battery to be the limited state, if the battery is in a discharge state and the second target charge-discharge power of the battery is greater than the maximum available power of the battery; or

if the battery is in a charge state and the second target charge-discharge power of the battery is less than the maximum available power of the battery.

In an embodiment, the module for calculating SOC proportional coefficient 110 is configured to: calculate the SOC proportional coefficient of the present battery based on a first formula, where the first formula includes:

$$
\begin{cases}
K_{soc\_i} = \dfrac{SOC_i}{SOC_{total}}, & P_{set} > 0 \\[4mm]
K_{soc\_i} = \dfrac{SOC_{\max} - SOC_i}{\displaystyle\sum_{i=1}^{N}(SOC_{\max} - SOC_i)}, & P_{set} < 0
\end{cases}
$$

where:

$K_{soc\_i}$ is the SOC proportional coefficient of an i-th battery;

$P_{set}$ is a third target charge-discharge power of the present battery, wherein $P_{set} > 0$ indicates that the present battery is in a discharge state, and $P_{set} < 0$ indicates that the present battery is in a charge state;

$SOC_{total}$ is a sum of SOC of all batteries online;

$SOC_{\max}$ denotes a maximum value of charging state; and

$N$ is a number of the all batteries online.

In an embodiment, the module for power controlling 120 is configured to: sum all charge-discharge power of all batteries in a limited state of the plurality of batteries of the ESS other than the present battery to obtain a sum of limited power;

subtract the sum of limited power from the first target charge-discharge power of the ESS to obtain a fourth target charge-discharge power that is to be distributed; and

calculate the given charge-discharge power of the present battery by multiplying the fourth target charge-discharge power by the SOC proportional coefficient of the present battery.

Compared with the prior art, advantageous effects of the control devices of the above device embodiments are as follows. The control devices can dynamically distribute charge-discharge power to each battery of an ESS based on SOCs of all online batteries of the ESS, such that SOCs of batteries of the ESS are balanced.

The present disclosure also provides computer program products having a program code. When the program code is running in a corresponding processor, controller, computing device or terminal, the steps of any embodiment of the control method provided by the present disclosure, such as the steps S101 and S102 shown in Figure 2, are performed.

Those skilled in the art should understand that the control methods and the corresponding control devices provided in the embodiments of the present disclosure may be realized in various forms of hardware, software, firmware, specific processor, or a combination thereof, where the specific processor may be Application Specific Integrated Circuits (ASIC), Reduced Instruction Set Computers (RISC), and/or Field-Programmable Gate Arrays (FPGA). The control methods and the corresponding control devices are preferably realized in a form of a combination of hardware and software. Preferably, the software may be installed as an application in a program storage device. Typically, the program storage device may be a machine based on a computer platform with hardware, such as one or more Central Processing Units (CPU), Random Access Memory (RAM), and one or more input/output (I/O) interfaces. Typically, an operating system is installed in the computer platform. The various processes corresponding to the steps of the control method and functions corresponding to the control devices may be part of the application installed in the program storage device, or be performed by the operating system.

Figure 4 is a schematic diagram of a terminal for balancing SOCs of batteries of an ESS provided by the present disclosure. As shown in Figure 4, the terminal 4 may include a processor 40, a memory 41 and a computer executable program 42 which is stored in the memory 41 and can be executed by the processor 40. When the computer executable program 42 is executed by the processor 40, the steps in the embodiments of control methods, such as steps S101 and S102 shown in Figure 2, can be performed; and/or, the functions of the modules/units in the embodiments of control devices, such as the modules 110 to 120 shown in Figure 3, can be realized.

Exemplarily, the computer executable program 42 may be divided into one or more modules/units which may be stored in the memory 41 and can be executed by the processor 40 to implement the technical solutions provided by the present disclosure. The one or more modules/units may be a series of computer program instruction segments capable of performing specific functions, and the instruction segments are used to describe the execution process of the computer executable program 42 in the terminal 4.

The terminal 4 may include, but is not limited to, the processor 40 and the memory 41. Those skilled in the art can understand that Figure 4 is only an example of the terminal 4, and does not constitute limitation to the terminal 4. The terminal 4 may include more or less components than shown, some components combined, or different components, for example, the terminal 4 may further include input and output devices, network access devices, buses and the like.

## Claims

1. A control method for balancing state of charge, SOC, of a plurality of batteries of an energy storage system**, ESS,** comprising a plurality of power conversion systems, PCS, wherein the plurality of PCSs are corresponds, one-to-one, with the plurality of batteries of the ESS, a first end of each PCS of the plurality of PCSs is connected with an output of a corresponding battery of the plurality of batteries of the ESS, a second end of each PCS is connected with a bus line, and the control method is **characterized in that** the control method comprises:

   calculating a SOC proportional coefficient of a present battery of the plurality of batteries of the ESS based on the SOC of the present battery and the SOC of all batteries online of the plurality of batteries of the ESS, wherein the SOC proportional coefficient refers to a proportion of the SOC of the present battery in the SOC of all batteries online;
   calculating a given charge-discharge power of the present battery based on a first target charge-discharge power of the ESS and the SOC proportional coefficient of the present battery; and
   controlling a charge-discharge power of the PCS corresponding to the present battery based on the given charge-discharge power of the present battery.

2. The control method of claim 1, **characterized in that** the SOC of the present battery is obtained according to an open circuit voltage, OCV, of the battery and a relationship of the present battery between OCV and SOC.

3. The control method of claim 1, **characterized in that** before calculating the SOC proportional coefficient of the present battery of the plurality of batteries of the ESS based on the SOC of the present battery and the SOC of all batteries online of the plurality of batteries of the ESS, the control method further comprises:

> for each battery of the plurality of batteries of the ESS,
> if a second target charge-discharge power of the battery exceeds a maximum available power of the battery, determining an operating state of the battery to be a limited state;
> if any broadcast data of the battery is not detected for a first preset period of time, determining the operating state of the battery to be an offline state;
> if the battery is detected to be in the offline state or not be in a normal operating state in a second preset period of time, determining the operating state of the battery to be an abnormal state; or
> if the battery is not in the limited state and the abnormal state, determining the operating state of the battery to be an online state and the battery to be one of the batteries online.

4. The control method of claim 3, **characterized in that** if the second target charge-discharge power of the battery exceeds the maximum available power of the battery, determining the operating state of the battery to be the limited state comprises:

> determining the operating state of the battery to be the limited state, if the battery is in a discharge state and the second target charge-discharge power of the battery is greater than the maximum available power of the battery; or
> if the battery is in a charge state and the second target charge-discharge power of the battery is less than the maximum available power of the battery.

5. The control method of claim 3, **characterized in that** if any broadcast data of the battery is not detected for the first preset period of time, determining the operating state of the battery to be the offline state comprises:
determining the operating state of the battery to be the offline state, if any broadcast frame of the battery is not detected by other batteries of the ESS for the first preset period of time.

6. The control method of claim 3, **characterized in that** the first preset period of time is 10 seconds.

7. The control method of claim 3, **characterized in that** the second preset period of time is 30 seconds.

8. The control method of claim 1, **characterized in that** calculating the SOC proportional coefficient of the present battery of the plurality of batteries of the ESS based on the SOC of the present battery and the SOC of all batteries online of the plurality of batteries of the ESS comprises:
calculating the SOC proportional coefficient of the present battery based on a first formula, wherein the first formula comprises:

$$
\begin{cases}
K_{soc\_i} = \dfrac{SOC_i}{SOC_{total}}, & P_{set} > 0 \\[4mm]
K_{soc\_i} = \dfrac{SOC_{\max} - SOC_i}{\displaystyle\sum_{i=1}^{N}(SOC_{\max} - SOC_i)}, & P_{set} < 0
\end{cases}
$$

wherein:

> $K_{soc\_i}$ is the SOC proportional coefficient of an i-th battery;
> $SOC_i$ is the SOC of the i-th battery;
> $P_{set}$ is a third target charge-discharge power of the present battery, wherein $P_{set} > 0$ indicates that the present battery is in a discharge state, and $P_{set} < 0$ indicates that the present battery is in a charge state;
> $SOC_{total}$ is a sum of SOC of all batteries online;
> $SOC_{\max}$ denotes a maximum value of charging state; and
> $N$ is a number of the all batteries online.

9. The control method of claim 1, **characterized in that** calculating the SOC proportional coefficient of the present battery of the plurality of batteries of the ESS based on the SOC of the present battery and the SOC of all batteries online of the plurality of batteries of the ESS comprises:

calculating the SOC proportional coefficient of the present battery based on a second formula, wherein the second formula comprises:

$$
\begin{cases}
K_{soc} = \dfrac{SOC_p}{SOC_{total}}, & P_{set} > 0 \\[4mm]
K_{soc} = \dfrac{SOC_{\max} - SOC_p}{\sum\limits_{i=1}^{N}(SOC_{\max} - SOC_i)}, & P_{set} < 0
\end{cases}
$$

wherein:

$K_{soc}$ is the SOC proportional coefficient of the present battery;
$P_{set}$ is a third target charge-discharge power of the present battery, wherein $P_{set} > 0$ indicates that the present battery is in a discharge state, and $P_{set} < 0$ indicates that the present battery is in a charge state;
$SOC_p$ is SOC of the present battery;
$SOC_{total}$ is a sum of SOC of all batteries online;
$SOC_{\max}$ denotes a maximum value of charging state;
$N$ is a number of the all batteries online; and
$SOC_i$ is the SOC of an i-th battery.

10. The control method of claim 1, **characterized in that** calculating the given charge-discharge power of the present battery based on the first target charge-discharge power of the ESS and the SOC proportional coefficient of the present battery comprises:

summing all charge-discharge power of all batteries in a limited state of the plurality of batteries of the ESS other than the present battery to obtain a sum of limited power;
subtracting the sum of limited power from the first target charge-discharge power of the ESS to obtain a fourth target charge-discharge power that is to be distributed; and
calculating the given charge-discharge power of the present battery by multiplying the fourth target charge-discharge power by the SOC proportional coefficient of the present battery.

11. A control device (100) for balancing state of charge, SOC, of a plurality of batteries of an energy storage system, ESS, comprising a plurality of power conversion systems, PCS, wherein the plurality of PCSs are corresponds, one-to-one, with the plurality of batteries of the ESS, a first end of each PCS of the plurality of PCSs is connected with an output of a corresponding battery of the plurality of batteries of the ESS, a second end of each PCS is connected with a bus line, and the control device is **characterized in that** the control device comprises:

a module (110) for calculating SOC proportional coefficient, configured to calculate a SOC proportional coefficient of a present battery of the plurality of batteries of the ESS based on the SOC of the present battery and the SOC of all batteries online of the plurality of batteries of the ESS, wherein the SOC proportional coefficient refers to a proportion of the SOC of the present battery in the SOC of all batteries online; and
a module (120) for power controlling, configured to calculate a given charge-discharge power of the present battery based on a first target charge-discharge power of the ESS and the SOC proportional coefficient of the present battery, and control a charge-discharge power of the PCS corresponding to the present battery based on the given charge-discharge power of the present battery.

12. The control device of claim 11, **characterized in that** the device further comprises a module for determining online state configured to determine an operating state of each battery of the plurality of batteries of the ESS, wherein the module for determining online state comprises:

a unit for determining limited state, configured to, if a second target charge-discharge power of the battery exceeds a maximum available power of the battery, determine the operating state of the battery to be a limited state;

a unit for determining offline state, configured to, if any broadcast data of the battery is not detected for a first preset period of time, determine the operating state of the battery to be an offline state;

a unit for determining abnormal state, configured to, if the battery is detected to be in the offline state or not be in a normal operating state in a second preset period of time, determine the operating state of the battery to be an abnormal state; and

a unit for determining online state, configured to, if the battery is not in the limited state and the abnormal state, determine the operating state of the battery to be an online state and the battery to be one of the batteries online.

13. The control device of claim 12, **characterized in that** the unit for determining limited state is configured to determine the operating state of the battery to be the limited state, if the battery is in a discharge state and the second target charge-discharge power of the battery is greater than the maximum available power of the battery; or

if the battery is in a charge state and the second target charge-discharge power of the battery is less than the maximum available power of the battery.

14. A terminal (4) comprising one or more processor (40), a memory (41) and a computer executable program (42) stored in the memory and executable by the one or more processor, **characterized in that**, steps of any one of claims 1 to 10 are performed, when the computer executable program is executed by the one or more processor.

15. A computer readable storage medium (41) storing a computer executable programm (42), **characterized in that**, steps of any one of claims 1 to 10 are performed, when the computer executable program is executed by a processor.

**Patentansprüche**

1. Steuerungsverfahren zum Ausgleichen eines Ladezustands (State Of Charge, SOC) mehrerer Batterien eines Energiespeichersystems (Energy Storage System, ESS), das mehrere Leistungswandlungssysteme (Power Conversion Systems, PCS) umfasst, wobei die mehreren PCS eins zu eins den mehreren Batterien des ESS entsprechen, wobei ein erstes Ende jedes PCS der mehreren PCS mit einem Ausgang einer entsprechenden Batterie der mehreren Batterien des ESS verbunden ist, wobei ein zweites Ende jedes PCS mit einer Busleitung verbunden ist, und wobei das Steuerungsverfahren **dadurch gekennzeichnet ist, dass** das Steuerungsverfahren umfasst:

Berechnen eines SOC-Proportionalkoeffizienten einer interessierenden Batterie der mehreren Batterien des ESS auf der Grundlage des SOC der interessierenden Batterie und des SOC aller zugeschalteten Batterien der mehreren Batterien des ESS, wobei sich der SOC-Proportionalkoeffizient auf einen Anteil des SOC der interessierenden Batterie am SOC aller zugeschalteten Batterien bezieht;

Berechnen einer gegebenen Lade-Entlade-Leistung der interessierenden Batterie auf der Grundlage einer ersten Soll-Lade-Entlade-Leistung des ESS und des SOC-Proportionalkoeffizienten der interessierenden Batterie; und

Steuern der Lade-Entlade-Leistung des PCS entsprechend der interessierenden Batterie auf der Grundlage der gegebenen Lade-Entlade-Leistung der interessierenden Batterie.

2. Steuerungsverfahren nach Anspruch 1, **dadurch gekennzeichnet, dass** der SOC der interessierenden Batterie gemäß einer Leerlaufspannung (Open Circuit Voltage, OCV) der Batterie und einer Beziehung zwischen OCV und SOC der interessierenden Batterie erhalten wird.

3. Steuerungsverfahren nach Anspruch 1, **dadurch gekennzeichnet, dass** das Steuerungsverfahren, vor dem Berechnen des SOC-Proportionalkoeffizienten der interessierenden Batterie der mehreren Batterien des ESS auf der Grundlage des SOC der interessierenden Batterie und des SOC aller zugeschalteten Batterien der mehreren Batterien des ESS, des Weiteren umfasst:

für jede Batterie der mehreren Batterien des ESS,

falls eine zweite Soll-Lade-Entlade-Leistung der Batterie eine maximal verfügbare Leistung der Batterie übersteigt, Bestimmen eines Betriebszustands der Batterie als einen begrenzten Zustand;

falls während eines ersten voreingestellten Zeitraums keine Rundsendedaten der Batterie detektiert werden, Bestimmen des Betriebszustands der Batterie als einen Abschaltzustand;

falls detektiert wird, dass sich die Batterie während eines zweiten voreingestellten Zeitraums im Abschaltzustand oder nicht in einem normalen Betriebszustand befindet, Bestimmen des Betriebszustands der Batterie als einen anormalen Zustand; oder

falls sich die Batterie nicht in dem begrenzten Zustand und dem anormalen Zustand befindet, Bestimmen des Betriebszustands der Batterie als einen Zuschaltzustand und der Batterie als eine der zugeschalteten Batterien.

4. Steuerungsverfahren nach Anspruch 3, **dadurch gekennzeichnet, dass**, falls die zweite Soll-Lade-Entlade-Leistung der Batterie die maximal verfügbare Leistung der Batterie übersteigt, das Bestimmen des Betriebszustands der Batterie als der begrenzte Zustand umfasst:

Bestimmen des Betriebszustands der Batterie als der begrenzte Zustand, falls sich die Batterie in einem Entladezustand befindet und die zweite Soll-Lade-Entlade-Leistung der Batterie größer als die maximal verfügbare Leistung der Batterie ist; oder

falls sich die Batterie in einem Ladezustand befindet und die zweite Soll-Lade-Entlade-Leistung der Batterie geringer als die maximal verfügbare Leistung der Batterie ist.

5. Steuerungsverfahren nach Anspruch 3, **dadurch gekennzeichnet, dass**, falls während des ersten voreingestellten Zeitraums keine Rundsendedaten der Batterie detektiert werden, das Bestimmen des Betriebszustands der Batterie als der Abschaltzustand umfasst:

Bestimmen des Betriebszustands der Batterie als den Abschaltzustand, falls während des ersten voreingestellten Zeitraums kein Rundsende-Frame der Batterie durch andere Batterien des ESS detektiert wird.

6. Steuerungsverfahren nach Anspruch 3, **dadurch gekennzeichnet, dass** der erste voreingestellte Zeitraum 10 Sekunden beträgt.

7. Steuerungsverfahren nach Anspruch 3, **dadurch gekennzeichnet, dass** der zweite voreingestellte Zeitraum 30 Sekunden beträgt.

8. Steuerungsverfahren nach Anspruch 1, **dadurch gekennzeichnet, dass** das Berechnen des SOC-Proportionalkoeffizienten der interessierenden Batterie der mehreren Batterien des ESS auf der Grundlage des SOC der interessierenden Batterie und des SOC aller zugeschalteten Batterien der mehreren Batterien des ESS umfasst:
Berechnen des SOC-Proportionalkoeffizienten der interessierenden Batterie auf der Grundlage einer ersten Formel, wobei die erste Formel umfasst:

$$\begin{cases} K_{soc\_i} = \dfrac{SOC_i}{SOC_{total}}, & P_{set} > 0 \\[2em] K_{soc\_i} = \dfrac{SOC_{\max} - SOC_i}{\sum\limits_{i=1}^{N}(SOC_{\max} - SOC_i)}, & P_{set} < 0 \end{cases}$$

wobei:

$K_{soc\_i}$ der SOC-Proportionalitätskoeffizient einer i-ten Batterie ist;
$SOC_i$ der SOC der i-ten Batterie ist;
$P_{set}$ eine dritte Soll-Lade-Entlade-Leistung der interessierenden Batterie ist, wobei $P_{set} > 0$ angibt, dass sich die interessierende Batterie in einem Entladezustand befindet, und $P_{set} < 0$ angibt, dass sich die interessierende Batterie in einem Ladezustand befindet;
$SOC_{total}$ eine Summe des SOC aller zugeschalteten Batterien ist;
$SOC_{\max}$ einen maximalen Wert des Ladezustands bezeichnet; und
$N$ eine Anzahl aller zugeschalteten Batterien ist.

9. Steuerungsverfahren nach Anspruch 1, **dadurch gekennzeichnet, dass** das Berechnen des SOC-Proportionalkoeffizienten der interessierenden Batterie der mehreren Batterien des ESS auf der Grundlage des SOC der interessierenden Batterie und des SOC aller zugeschalteten Batterien der mehreren Batterien des ESS umfasst: Berechnen des SOC-Proportionalkoeffizienten der interessierenden Batterie auf der Grundlage einer zweiten Formel, wobei die zweite Formel umfasst:

$$\begin{cases} K_{soc} = \dfrac{SOC_p}{SOC_{total}}, & P_{set} > 0 \\[4mm] K_{soc} = \dfrac{SOC_{\max} - SOC_p}{\sum\limits_{i=1}^{N}(SOC_{\max} - SOC_i)}, & P_{set} < 0 \end{cases}$$

wobei:

$K_{soc}$ der SOC-Proportionalitätskoeffizient der interessierenden Batterie ist;
$P_{set}$ eine dritte Soll-Lade-Entlade-Leistung der interessierenden Batterie ist, wobei $P_{set} > 0$ angibt, dass sich die interessierende Batterie in einem Entladezustand befindet, und $P_{set} < 0$ angibt, dass sich die interessierende Batterie in einem Ladezustand befindet;
$SOC_p$ der SOC der interessierenden Batterie ist;
$SOC_{total}$ eine Summe des SOC aller zugeschalteten Batterien ist;
$SOC_{\max}$ einen maximalen Wert des Ladezustands bezeichnet;
$N$ eine Anzahl aller zugeschalteten Batterien ist; und
$SOC_i$ der SOC einer i-ten Batterie ist.

**10.** Steuerungsverfahren nach Anspruch 1, **dadurch gekennzeichnet, dass** das Berechnen der gegebenen Lade-Entlade-Leistung der interessierenden Batterie auf der Grundlage der ersten Soll-Lade-Entlade-Leistung des ESS und des SOC-Proportionalkoeffizienten der interessierenden Batterie umfasst:

Summieren der gesamten Lade-Entlade-Leistung aller Batterien in einem begrenzten Zustand der mehreren Batterien des ESS mit Ausnahme der interessierenden Batterie, um eine Summe einer begrenzten Leistung zu erhalten;
Subtrahieren der Summe der begrenzten Leistung von der ersten Soll-Lade-Entlade-Leistung des ESS, um eine vierte Soll-Lade-Entlade-Leistung zu erhalten, die verteilt werden soll; und
Berechnen der gegebenen Lade-Entlade-Leistung der interessierenden Batterie durch Multiplizieren der vierten Soll-Lade-Entlade-Leistung mit dem SOC-Proportionalkoeffizienten der interessierenden Batterie.

**11.** Steuerungsvorrichtung (100) zum Ausgleichen eines Ladezustands (State Of Charge, SOC) mehrerer Batterien eines Energiespeichersystems (Energy Storage System, ESS), das mehrere Leistungswandlungssysteme (Power Conversion Systems, PCS) umfasst, wobei die mehreren PCS eins zu eins den mehreren Batterien des ESS entsprechen, wobei ein erstes Ende jedes PCS der mehreren PCS mit einem Ausgang einer entsprechenden Batterie der mehreren Batterien des ESS verbunden ist, wobei ein zweites Ende jedes PCS mit einer Busleitung verbunden ist, und wobei die Steuerungsvorrichtung **dadurch gekennzeichnet ist, dass** die Steuerungsvorrichtung umfasst:

ein Modul (110) zum Berechnen eines SOC-Proportionalkoeffizienten, das eingerichtet ist zum Berechnen eines SOC-Proportionalkoeffizienten einer interessierenden Batterie der mehreren Batterien des ESS auf der Grundlage des SOC der interessierenden Batterie und des SOC aller zugeschalteten Batterien der mehreren Batterien des ESS, wobei sich der SOC-Proportionalkoeffizient auf einen Anteil des SOC der interessierenden Batterie am SOC aller zugeschalteten Batterien bezieht; und
ein Modul (120) zur Leistungssteuerung, das eingerichtet ist zum Berechnen einer gegebenen Lade-Entlade-Leistung der interessierenden Batterie auf der Grundlage einer ersten Soll-Lade-Entlade-Leistung des ESS und des SOC-Proportionalkoeffizienten der interessierenden Batterie und zum Steuern einer Lade-Entlade-Leistung des PCS, die der interessierenden Batterie entspricht, auf der Grundlage der gegebenen Lade-Entlade-Leistung der interessierenden Batterie.

**12.** Steuerungsvorrichtung nach Anspruch 11, **dadurch gekennzeichnet, dass** die Vorrichtung des Weiteren ein Zuschaltzustands-Bestimmungsmodul umfasst, das eingerichtet ist zum Bestimmen eines Betriebszustands jeder Batterie der mehreren Batterien des ESS, wobei das Zuschaltzustands-Bestimmungsmodul umfasst:

eine Begrenztzustands-Bestimmungseinheit, die dazu eingerichtet ist, falls eine zweite Soll-Lade-Entlade-Leistung der Batterie eine maximal verfügbare Leistung der Batterie übersteigt, den Betriebszustand der Batterie als einen begrenzten Zustand zu bestimmen;

eine Abschaltzustands-Bestimmungseinheit, die dazu eingerichtet ist, falls während eines ersten voreingestellten Zeitraums keine Rundsendedaten der Batterie detektiert werden, den Betriebszustand der Batterie als einen Abschaltzustand zu bestimmen;

eine Anomaliezustands-Bestimmungseinheit, die dazu eingerichtet ist, falls detektiert wird, dass sich die Batterie während eines zweiten voreingestellten Zeitraums im Abschaltzustand oder nicht in einem normalen Betriebszustand befindet, den Betriebszustand der Batterie als einen anormalen Zustand zu bestimmen; und

eine Zuschaltzustands-Bestimmungseinheit, die dazu eingerichtet ist, falls sich die Batterie nicht in dem begrenzten Zustand und dem anormalen Zustand befindet, den Betriebszustand der Batterie als einen Zuschaltzustand und die Batterie als eine der zugeschalteten Batterien zu bestimmen.

13. Steuerungsvorrichtung nach Anspruch 12, **dadurch gekennzeichnet, dass** die Begrenztzustands-Bestimmungseinheit dazu eingerichtet ist, den Betriebszustand der Batterie als den begrenzten Zustand zu bestimmen, falls sich die Batterie in einem Entladezustand befindet und die zweite Soll-Lade-Entlade-Leistung der Batterie größer als die maximal verfügbare Leistung der Batterie ist; oder

falls sich die Batterie in einem Ladezustand befindet und die zweite Soll-Lade-Entlade-Leistung der Batterie geringer als die maximal verfügbare Leistung der Batterie ist.

14. Endgerät (4), umfassend einen oder mehrere Prozessoren (40), einen Speicher (41) und ein computerausführbares Programm (42), das in dem Speicher gespeichert ist und durch den einen oder die mehreren Prozessoren ausführbar ist, **dadurch gekennzeichnet, dass** Schritte nach einem der Ansprüche 1 bis 10 durchgeführt werden, wenn das computerausführbare Programm durch den einen oder die mehreren Prozessoren ausgeführt wird.

15. Computerlesbares Speichermedium (41), das ein computerausführbares Programm (42) speichert, **dadurch gekennzeichnet, dass** Schritte nach einem der Ansprüche 1 bis 10 durchgeführt werden, wenn das computerausführbare Programm durch einen Prozessor ausgeführt wird.

**Revendications**

1. Procédé de commande pour équilibrer un état de charge (State Of Charge, SOC) de plusieurs batteries d'un système de stockage d'énergie (Energy Storage System, ESS) comprenant plusieurs systèmes de conversion de puissance (Power Conversion Systems, PCS), dans lequel les plusieurs PCS sont des correspondances, un à un, avec les plusieurs batteries de l'ESS, une première extrémité de chaque PCS des plusieurs PCS est connectée à une sortie d'une batterie correspondante des plusieurs batteries de l'ESS, une seconde extrémité de chaque PCS est connectée à une ligne de bus, et le procédé de commande est **caractérisé en ce que** le procédé de commande comprend de :

calculer un coefficient de proportionnalité de SOC d'une batterie actuelle des plusieurs batteries de l'ESS sur la base du SOC de la batterie actuelle et du SOC de toutes les batteries en ligne des plusieurs batteries de l'ESS, dans lequel le coefficient de proportionnalité de SOC se réfère à une proportion du SOC de la batterie actuelle dans le SOC de toutes les batteries en ligne ;

calculer une puissance de charge-décharge donnée de la batterie actuelle sur la base d'une première puissance de charge-décharge cible de l'ESS et du coefficient de proportionnalité de SOC de la batterie actuelle ; et

commander une puissance de charge-décharge du PCS correspondant à la batterie actuelle sur la base de la puissance de charge-décharge donnée de la batterie actuelle.

2. Procédé de commande selon la revendication 1, **caractérisé en ce que** le SOC de la batterie actuelle est obtenu en fonction d'une tension en circuit ouvert (Open Circuit Voltage, OCV) de la batterie et d'une relation de la batterie actuelle entre l'OCV et le SOC.

3. Procédé de commande selon la revendication 1, **caractérisé en ce que**, avant de calculer le coefficient de proportionnalité de SOC de la batterie actuelle des plusieurs batteries de l'ESS sur la base du SOC de la batterie actuelle et du SOC de toutes les batteries en ligne des plusieurs batteries de l'ESS, le procédé de commande comprend en outre de :

pour chaque batterie des plusieurs batteries de l'ESS,
si une deuxième puissance de charge-décharge cible de la batterie dépasse une puissance disponible maximale de la batterie, déterminer qu'un état de fonctionnement de la batterie est un état limité ;
si aucune donnée de diffusion de la batterie n'est détectée pendant une première période de temps prédéfinie, déterminer que l'état de fonctionnement de la batterie est un état hors ligne ;
s'il est détecté que la batterie est dans l'état hors ligne ou n'est pas dans un état de fonctionnement normal pendant une seconde période de temps prédéfinie, déterminer que l'état de fonctionnement de la batterie est un état anormal ; ou
si la batterie n'est pas dans l'état limité et l'état anormal, déterminer que l'état de fonctionnement de la batterie est un état en ligne et que la batterie est l'une des batteries en ligne.

4. Procédé de commande selon la revendication 3, **caractérisé en ce que** si la deuxième puissance de charge-décharge cible de la batterie dépasse la puissance disponible maximale de la batterie, la détermination que l'état de fonctionnement de la batterie est l'état limité comprend de :

déterminer que l'état de fonctionnement de la batterie est l'état limité, si la batterie est dans un état de décharge et si la deuxième puissance de charge-décharge cible de la batterie est supérieure à la puissance disponible maximale de la batterie ; ou
si la batterie est dans un état de charge et si la deuxième puissance de charge-décharge cible de la batterie est inférieure à la puissance disponible maximale de la batterie.

5. Procédé de commande selon la revendication 3, **caractérisé en ce que** si aucune donnée de diffusion de la batterie n'est détectée pendant la première période de temps prédéfinie, la détermination que l'état de fonctionnement de la batterie est l'état hors ligne comprend de :
déterminer que l'état de fonctionnement de la batterie est l'état hors ligne, si aucune trame de diffusion de la batterie n'est détectée par d'autres batteries de l'ESS pendant la première période de temps prédéfinie.

6. Procédé de commande selon la revendication 3, **caractérisé en ce que** la première période de temps prédéfinie est de 10 secondes.

7. Procédé de commande selon la revendication 3, **caractérisé en ce que** la seconde période de temps prédéfinie est de 30 secondes.

8. Procédé de commande selon la revendication 1, **caractérisé en ce que** le calcul du coefficient de proportionnalité de SOC de la batterie actuelle des plusieurs batteries de l'ESS sur la base du SOC de la batterie actuelle et du SOC de toutes les batteries en ligne des plusieurs batteries de l'ESS comprend de :
calculer le coefficient de proportionnalité de SOC de la batterie actuelle sur la base d'une première formule, dans lequel la première formule comprend :

$$\begin{cases} K_{soc\_i} = \dfrac{SOC_i}{SOC_{total}}, & P_{set} > 0 \\[4mm] K_{soc\_i} = \dfrac{SOC_{max} - SOC_i}{\sum\limits_{i=1}^{N}(SOC_{max} - SOC_i)}, & P_{set} < 0 \end{cases}$$

dans laquelle :

$K_{soc\_i}$ est le coefficient de proportionnalité de SOC d'une $i$ème batterie ;
$SOC_i$ est le SOC de la $i$ème batterie ;
$P_{set}$ est une troisième puissance de charge-décharge cible de la batterie actuelle, dans laquelle $P_{set} > 0$ indique que la batterie actuelle est dans un état de décharge et $P_{set} < 0$ indique que la batterie actuelle est dans un état de

charge ;

$SOC_{total}$ est une somme des SOC de toutes les batteries en ligne ;

$SOC_{max}$ représente une valeur maximale d'état de charge ; et

$N$ est un nombre de toutes les batteries en ligne.

**9.** Procédé de commande selon la revendication 1, **caractérisé en ce que** le calcul du coefficient de proportionnalité de SOC de la batterie actuelle des plusieurs batteries de l'ESS sur la base du SOC de la batterie actuelle et du SOC de toutes les batteries en ligne des plusieurs batteries de l'ESS comprend de :

calculer le coefficient de proportionnalité de SOC de la batterie actuelle sur la base d'une seconde formule, dans lequel la seconde formule comprend :

$$\begin{cases} K_{soc} = \dfrac{SOC_p}{SOC_{total}}, & P_{set} > 0 \\[3em] K_{soc} = \dfrac{SOC_{max} - SOC_p}{\sum\limits_{i=1}^{N}(SOC_{max} - SOC_i)}, & P_{set} < 0 \end{cases}$$

dans laquelle :

$K_{soc}$ est le coefficient de proportionnalité de SOC de la batterie actuelle ;

$P_{set}$ est une troisième puissance de charge-décharge cible de la batterie actuelle, dans laquelle $P_{set} > 0$ indique que la batterie actuelle est dans un état de décharge et $P_{set} < 0$ indique que la batterie actuelle est dans un état de charge ;

$SOC_p$ est le SOC de la batterie actuelle ;

$SOC_{total}$ est une somme des SOC de toutes les batteries en ligne ;

$SOC_{max}$ représente une valeur maximale d'état de charge ;

$N$ est un nombre de toutes les batteries en ligne ; et

$SOC_i$ est le SOC d'une $i^{ème}$ batterie.

**10.** Procédé de commande selon la revendication 1, **caractérisé en ce que** le calcul de la puissance de charge-décharge donnée de la batterie actuelle sur la base de la première puissance de charge-décharge cible de l'ESS et du coefficient de proportionnalité de SOC de la batterie actuelle comprend de :

additionner toutes les puissances de charge-décharge de toutes les batteries dans un état limité des plusieurs batteries d'ESS autres que la batterie actuelle pour obtenir une somme de puissances limitées ;

soustraire la somme de puissances limitées de la première puissance de charge-décharge cible de l'ESS pour obtenir une quatrième puissance de charge-décharge cible qui doit être répartie ; et

calculer la puissance de charge-décharge donnée de la batterie actuelle en multipliant la quatrième puissance de charge-décharge cible par le coefficient de proportionnalité de SOC de la batterie actuelle.

**11.** Dispositif de commande (100) destiné à équilibrer un état de charge (State Of Charge, SOC) de plusieurs batteries d'un système de stockage d'énergie (Energy Storage System, ESS) comprenant plusieurs systèmes de conversion de puissance (Power Conversion Systems, PCS), dans lequel les PCS des plusieurs PCS sont des correspondances, un à un, avec les plusieurs batteries de l'ESS, une première extrémité de chaque PCS des plusieurs PCS est connectée à une sortie d'une batterie correspondante des plusieurs batteries de l'ESS, une seconde extrémité de chaque PCS est connectée à une ligne de bus, et le dispositif de commande est **caractérisé en ce que** le dispositif de commande comprend :

un module (110) de calcul de coefficient de proportionnalité de SOC, configuré pour calculer un coefficient de proportionnalité de SOC d'une batterie actuelle des plusieurs batteries de l'ESS sur la base du SOC de la batterie actuelle et du SOC de toutes les batteries en ligne des plusieurs batteries de l'ESS, dans lequel le coefficient de proportionnalité de SOC se réfère à une proportion du SOC de la batterie actuelle dans le SOC de toutes les batteries en ligne ; et

un module (120) de commande de puissance, configuré pour calculer une puissance de charge-décharge donnée de la batterie actuelle sur la base d'une première puissance de charge-décharge cible de l'ESS et du coefficient de proportionnalité de SOC de la batterie actuelle, et commander une puissance de charge-décharge du PCS correspondant à la batterie actuelle sur la base de la puissance de charge-décharge donnée de la batterie actuelle.

12. Dispositif de commande selon la revendication 11, **caractérisé en ce que** le dispositif comprend en outre un module de détermination d'état en ligne configuré pour déterminer un état de fonctionnement de chaque batterie des plusieurs batteries de l'ESS, dans lequel le module de détermination d'état en ligne comprend :

une unité de détermination d'état limité, configurée pour, si une deuxième puissance de charge-décharge cible de la batterie dépasse une puissance disponible maximale de la batterie, déterminer que l'état de fonctionnement de la batterie est un état limité ;
une unité de détermination d'état hors ligne, configurée pour, si aucune donnée de diffusion de la batterie n'est détectée pendant une première période de temps prédéfinie, déterminer que l'état de fonctionnement de la batterie est un état hors ligne ;
une unité de détermination d'état anormal, configurée pour, s'il est détecté que la batterie est dans l'état hors ligne ou n'est pas dans un état de fonctionnement normal pendant une seconde période de temps prédéfinie, déterminer que l'état de fonctionnement de la batterie est un état anormal ; et
une unité de détermination d'état en ligne, configurée pour, si la batterie n'est pas dans l'état limité et l'état anormal, déterminer que l'état de fonctionnement de la batterie est un état en ligne et que la batterie est l'une des batteries en ligne.

13. Dispositif de commande selon la revendication 12, **caractérisé en ce que** l'unité de détermination d'état limité est configurée pour déterminer que l'état de fonctionnement de la batterie est l'état limité, si la batterie est dans un état de décharge et si la deuxième puissance de charge-décharge cible de la batterie est supérieure à la puissance disponible maximale de la batterie ; ou
si la batterie est dans un état de charge et si la deuxième puissance de charge-décharge cible de la batterie est inférieure à la puissance disponible maximale de la batterie.

14. Terminal (4) comprenant un ou plusieurs processeurs (40), une mémoire (41) et un programme exécutable par ordinateur (42) stocké dans la mémoire et exécutable par le ou les plusieurs processeurs, **caractérisé en ce que** les étapes de l'une quelconque des revendications 1 à 10 sont réalisées lorsque le programme exécutable par ordinateur est exécuté par le ou les plusieurs processeurs.

15. Support de stockage lisible par ordinateur (41) stockant un programme exécutable par ordinateur (42), **caractérisé en ce que** les étapes de l'une quelconque des revendications 1 à 10 sont réalisées lorsque le programme exécutable par ordinateur est exécuté par un processeur.

bus line

PCS       PCS    • • •    PCS

battery    battery    • • •    battery

**Figure 1**

| |
|---|
| calculating a SOC proportional coefficient of a present battery of a plurality of batteries of an ESS based on the SOC of the present battery and the SOC of all batteries online of all batteries of the ESS, where the SOC proportional coefficient refers to a proportion of the SOC of the present battery in the SOC of all batteries online |

S101

| |
|---|
| calculating a given charge-discharge power of the present battery based on a first target charge-discharge power of the ESS and the SOC proportional coefficient of the present battery, and controlling a charge-discharge power of a PCS corresponding to the present battery based on the given charge-discharge power of the present battery |

S102

**Figure 2**

100

module for calculating SOC
proportional coefficient ⟍110

module for power controlling ⟍120

**Figure 3**

41⟍ 4

memory 40

42⟍ computer
executable
program ⟷ processor

**Figure 4**